# EUROPEAN PATENT SPECIFICATION

(11) **EP 2 880 749 B1**
(45) Date of publication and mention of the grant of the patent: **02.11.2016**
(21) Application number: 13773399.4
(22) Date of filing: 29.07.2013
(51) Int. Cl.: H02K 16/02, H02K 17/16, H02K 11/00

(54) **ELECTRICAL MACHINE**
ELEKTRISCHE MASCHINE
MACHINE ELECTRIQUE

(30) Priority: 31.07.2012 IT MI20121339
(43) Date of publication of application: 10.06.2015
(73) Proprietor: Italconsul S.r.l., 00153 Roma (IT); Bisti, Emanuele, 67100 L'Aquila (IT)
(72) Inventor: BISTI, Emanuele, I-67100 L'Aquila (IT); PAGGI, Roberto, I-00149 Roma (IT)
(74) Representative: Tansini, Elio Fabrizio
(86) International application number: PCT/IB2013/056193
(87) International publication number: WO 2014/020514

(56) References cited:
- EP-A1- 0 703 659
- EP-A1- 2 072 312
- WO-A1-00/31857
- CA-C- 2 073 164
- FR-A- 725 632

## Description

### FIELD OF INVENTION

The present invention relates to an electric machine.

### TECHNICAL FIELD

As is known, various types of electric machine exist. Electric machines are known that have a co-penetrated structure, which comprise, apart from a stator and a rotor, a "meta-rotor", i.e. an additional rotor radially interposed between the stator and the rotor. In this way two electric machines are virtually created which are distinct but interconnected: the one formed by the stator and the meta-rotor, the other formed by the meta-rotor and the rotor.

In accordance with the type of supply provided to the windings present on the three components, and as a function of any constraints in mechanical movement imparted thereon (for example, a determined rotation velocity imparted on the rotor) it is possible to obtain mechanical and/or electric power from the machine.

FR 725632 shows an induction motor which comprises four windings independently short-circuited and not connected to one another.

In the light of the above, an aim of the present invention is to provide an electric machine able to optimise the mechanical transmission with various torque/velocity characteristics, realising a regenerative mechanical decoupling between the input axis and the output axis.

A further aim is to provide an electric machine able to optimize an electro-magnetic power transmission so as to improve the characteristics of the machine in traction applications it is designed for.

A further aim of the invention is to provide an electric machine able both to exchange electrical energy with an electricity supply network or a battery according to the sign of the energetic balance, and to operate as an electric motor.

### SUMMARY OF THE INVENTION

These and other aims are substantially attained by an electric machine according to what is described in the appended claims.

Further characteristics and advantages will more fully emerge from the detailed description of preferred but not exclusive embodiments of the invention.

### BRIEF DESCRIPTION OF THE DRAWINGS

The description is provided in the following with reference to the accompanying figures, also provided purely by way of example, wherein:
figure 1 shows a schematic lateral view of a machine according to the invention;
figure 1a shows a variant of the machine of figure 1, according to the invention;
figure 1b shows components of the machine of figure 1a; figure 2 shows a schematic perspective view of a portion of the machine of figure 1;

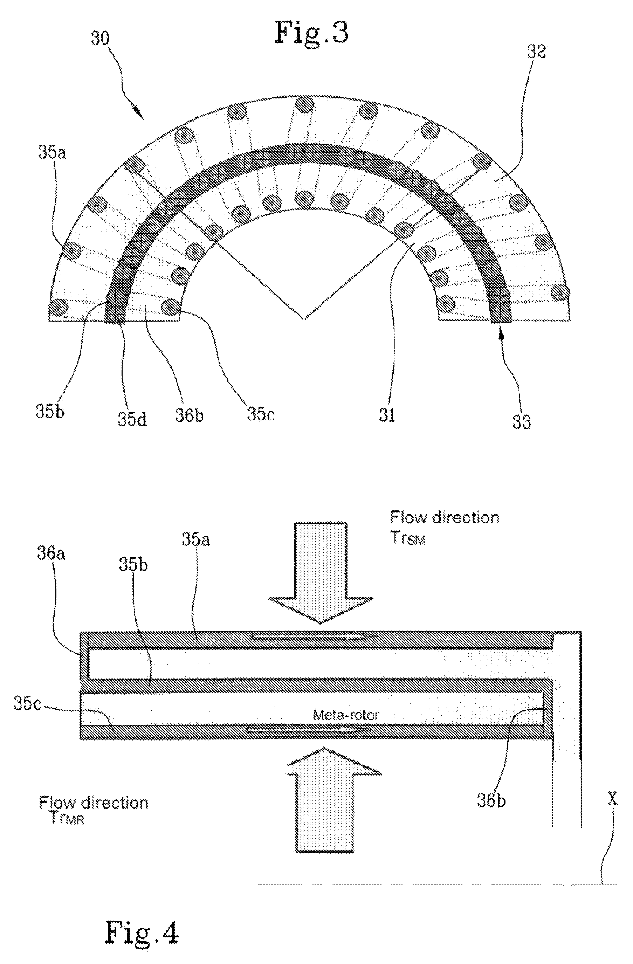

figure 3 shows a partial schematic view of a section according to an axial plane PA of the portion of machine of figure 2;
figure 4 shows a partial schematic view of a section according to a radial plane PR of the portion of machine of figure 2;
figure 5 shows a block diagram representing a possible application of the invention;
figure 6 shows a power flow diagram of the application of figure 5;
figure 7 shows a first functioning mode of the machine of the invention;
figure 8 shows the situation at the stator/meta-rotor air gap in a first case of the mode of figure 7;
figure 9 shows a phase diagram at the meta-rotor/rotor air gap in a first case of the mode of figure 7;
figure 10 shows the situation at the stator/meta-rotor air gap in a second case of the mode of figure 7;
figure 11 shows a phase diagram at the meta-rotor/rotor air gap in a second case of the mode of figure 7;
figure 12 shows a second functioning mode of the machine of the invention;
figure 13 shows the situation at the stator/meta-rotor air gap in a first case of the mode of figure 12;
figure 14 shows a phase diagram at the meta-rotor/rotor air gap in a first case of the mode of figure 12;
figure 15 shows the situation at the stator/meta-rotor air gap in a second case of the mode of figure 12;
figure 16 shows a phase diagram at the meta-rotor/rotor air gap in a second case of the mode of figure 12;
figure 17 shows a third functioning mode of the machine of the invention;
figures 17a, 17b, 17c, 17d show steps of the mode of figure 17.

### DETAILED DESCRIPTION OF THE INVENTION

With reference to the accompanying figures, 1 denotes in its entirety the electric machine according to the invention.

The electric machine 1 primarily comprises a stator 10.

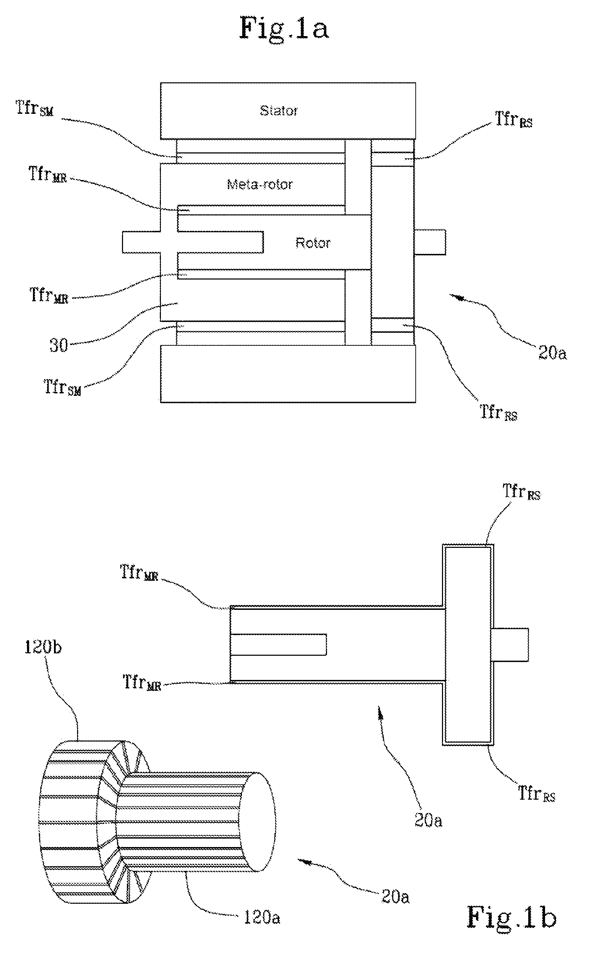

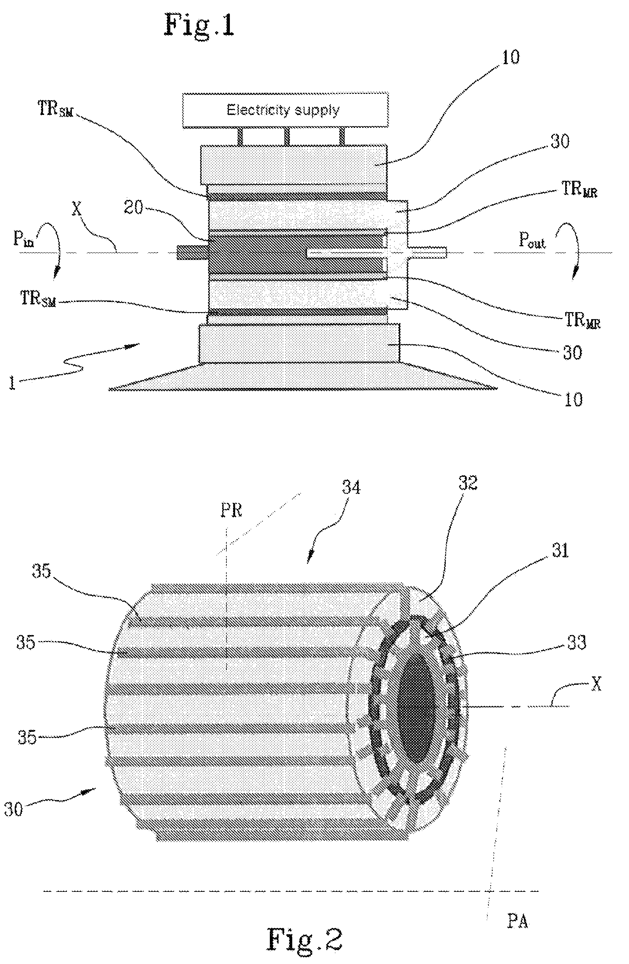

The stator 10 has a substantially cylindrical conformation and extends along a longitudinal axis X thereof, as schematically illustrated in figure 1.

The stator 10 is preferably provided with a three-phase winding.

The stator 10 is preferably provided with a plurality of grooves (known as "stator grooves"), internal of the pack of stator blades.

The stator 10 is preferably associated to a supply unit or network, from which or towards which the electric power is transferred.

The machine 1 further comprises a rotor 20, associated to the stator 10.

The rotor 20 exhibits a substantially cylindrical structure. The cylindrical structure of the rotor 20 develops longitudinally along the longitudinal axis X.

The rotor 20 is mobile in rotation about the longitudinal axis X.

The rotor 20 preferably exhibits grooves (rotor grooves) for housing the rotor winding.

The grooves are preferably fashioned on the radially external surface of the rotor 20.

The machine 1 further comprises an additional rotor, or meta-rotor 30.

The meta-rotor 30 is radially interposed between the stator 10 and the rotor 20.

The meta-rotor 30 exhibits a substantially cylindrical conformation.

The meta-rotor 30 develops longitudinally along the above-mentioned longitudinal axis X.

The meta-rotor 30 is mobile in rotation about the longitudinal axis X.

The meta-rotor 30 is provided with windings, which will be more fully described in the following, so as to cooperate electromagnetically with the stator 10 and the rotor 20.

In particular, with reference to figure 1, given the above-described structure, a first air gap Trsm is formed between the stator 10 and the meta-rotor 30, and a second air gap TRmr is formed between the meta-rotor 30 and the rotor 20.

In a variant of the invention (figures 1a, 1b), a rotor 20a is in magnetic connection with the stator 10 with the aim of supplying the magnetising energy directly to the rotor 20a. The electric machine thus exhibits a third air gap TRrs between the rotor 20a and the stator 10.

The winding is single from the electrical point of view, but differentiated into two windings "in series", taking the two air gaps TRmr and TRsr into consideration (figure 1b).

In this variant, the machine preferably comprises a meta-rotor 30 with windings wound in short circuit and the stator 10 supplied magnetically by a three-phase winding; the rotor 20a exhibits, however, two windings 120a and 120b wound on two different locations and diameters but electrically in series.

The two in-series windings can preferably have a turn ratio of n:m and, preferably, be wound on different planes in longitudinal section.

In other words, in the passage between a first winding and a second winding each conductor is wound on a second plane characterised by a fixed angle with respect to the plane of the first winding.

The same connection is exposed both in the first and second air gaps TRsr and TRmr.

In an embodiment, the stator 10 develops radially externally of the meta-rotor 30, 30a and the rotor 20, 20a, while the rotor 20, 20a develops radially at least partially internally with respect to the meta-rotor 30, 30a.

In a different embodiment, the rotor 20 develops radially externally of the meta-rotor 20 and the stator 10, while the stator 10 develops radially internally with respect to the meta-rotor 30.

Note that in the general embodiment considered (figure 1), the structure of the electric machine 1 involves the virtual presence of two electric machines: a first electric machine formed by the stator 10 and the meta-rotor 30, and a second electric machine formed by the meta-rotor 30 and the rotor 20.

With the special solution for the meta-rotor 30 the two machines are necessarily interactive with one another; the modes this can occur in are explained in the following.

In the variant of figure 1a, 1b, the structure of the electric machine 1 involves the virtual presence of three electric machines, in which the first two coincide with those of the general embodiment, while the third electric machine is formed by the stator 10 and the rotor 20a.

As schematically shown in the accompanying figures, the meta-rotor 30 comprises a radially internal portion 31 and a radial external portion 32, separated by a separation region 33.

The meta-rotor 30 further comprises an electrically conductive wire 34 specially arranged so as to form a plurality of turns and enable magnetic interaction between the meta-rotor 30 and the other components of the machine 1. In particular the wire 34 comprises a plurality of contiguous portions 35.

Each portion 35 comprises, in succession:
a first section 35a extending on the radially external surface of the radially external portion 32 of the meta-rotor; the first section 35a is substantially parallel to said longitudinal axis X;
a second section 35b extending in the separation region 33; the second section 35b is substantially parallel to the longitudinal axis X;
a third section 35c extending on the radially internal surface of said radially internal portion 31; the third section 35c is substantially parallel to the longitudinal axis X.

Each of the portions 35 of the wire 34 preferably further comprises a fourth section 35d following said third section 35c. The fourth section 35d extends in the separation region 33, parallel to the longitudinal axis X.

The first and the third sections 35a, 35c are preferably housed in respective cavities fashioned, respectively, on the radially external portion 32 of the meta-rotor 30 and on the radially internal surface of the radially internal portion 31 of the meta-rotor 30.

The separation region 33 preferably exhibits a plurality of pairs of through-holes 33a, 33b each arranged so as to house the second and the fourth section 35b, 35d of a respective portion 35 of the wire 34.

In particular each through-hole 33a, 33b is arranged parallel to the longitudinal axis X.

Each portion 35 of the wire 33 preferably comprises connection sections 36a, 36b for connecting the first section 35a to the second section 35b, and the second section 35b to the third section 35c.

Each portion 35 preferably further comprises an auxiliary connection section (not illustrated) for connecting the third section 35c to the fourth section 35d.

Each portion 35 preferably further comprises an additional connection section for a connection with the next section and/or the preceding section.

The numbers of pathways or sections 35a, 35b, 35c are not necessarily identical; they can preferably exhibit a ratio between the turns n:m of for example 1:2 or 2:1.

The technical effect achieved by this solution is an optimisation of the transfer of power between the air gap TRsm and the air gap TRmr.

The structure of the winding of the above-described meta-rotor 30 enables electrically connecting the first air gap TRsm and the second air gap TRmr, inverting the direction of the current and thus the flux concatenated therewith.

The magnetic field generated by the stator 10, when closing on the meta-rotor 30, concatenates with the part of wire 33 which faces on the first air gap TRsm, inducing therein currents that generate an antagonist rotary field.

In particular the technical solution claimed enables introducing, in the second air gap TRmr, the currents collected in the first air gap TRsm.

The balanced n-tuple of currents, generated as an induced reaction in the meta-rotor 30, creates the rotary magnetic field in the second air gap TRmr.

Note that, in this situation, the generated field is synchronous with the pulsation of the field generated by the stator 10, but is out of phase with respect thereto by the torque angle set up in the first air gap TRsm.

The internal field of the meta-rotor 30 closes on the rotor and is concatenated with the winding thereof, thus magnetising the second asynchronous machine in cascade. Further, as the winding of the meta-rotor 30 is "cross-meshed", i.e. exhibits the special structure described above, the currents provided by the two air gaps are reinforced and reciprocally return to phase.

In particular, if a generating machine is set up in the first air gap TRsm, the additional current intensities reinforce the currents applied and the velocities created in the second air gap TRmr which is functioning as a motor.

If, on the other hand, a generating machine is set up at the second air gap TRmr, the additional current intensities reinforce the applied currents and the torques created at the first air gap TRsm which is functioning as a motor.

The described structure constitutes an "intelligent" electromechanical joint which autonomously adapts the load characteristic without involving the motor which supplies, upstream, the mechanical power (known also as the "first motor"). This is especially true for the load disturbances or pulse charges which are not perceived by the first motor.

In other terms, a constant power is demanded from the first motor, dispensed with a number of revolutions and torque that are practically constant, while the load manages variable powers in terms of torque/velocity.

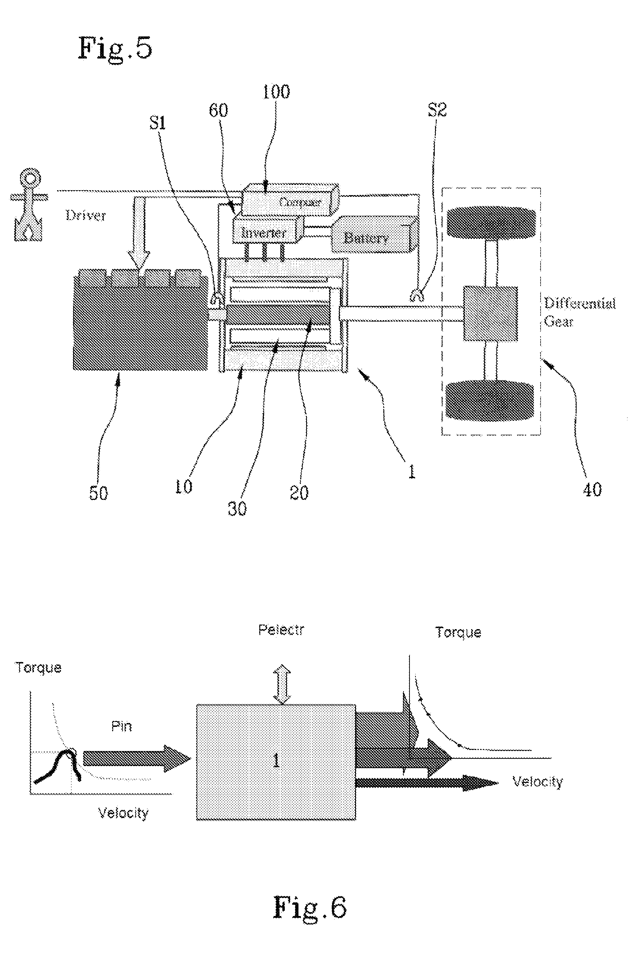

The stator 10 is electrically powered via an inverter (figure 5) which applies a polyphase system of symmetrical concatenated tensions controlled, in tension and/or frequency, by a specially-programmed processor 100.

In other words, the traction system of the invention comprises an inverter 60 controlled by a processor 100.

The processor 100 is advantageously associated to a first sensor S1, configured so as to detect a parameter representing the angular velocity ωR of the rotor 20, and to a second sensor S2 configured such as to detect a parameter representing the angular velocity ωM of the meta-rotor 30 and, preferably, a parameter representing the position, where it is deemed necessary.

The first and second sensor are conveniently used to activate a coordinated control on the rotor 20, on the meta-rotor 30, and on the stator 10, the last by regulating the tension, current and frequency.

In other words, the processing unit 100 is associated to the first sensor S1 and the second sensor S2 and is configured so as to pilot the inverter 60 according to the velocity values ωR, ωM detected.

In still other words, the machine comprises a processor 100 configured so as to control the inverter 60 according to the currents and phases of supply, velocity and position of the meta-rotor 30 and the rotor 20.

In this application the rotor 20 is solidly associated to a moving member 50 such as, for example, a thermal motor, which rotates the rotor 20 at an angular velocity ωR. The angular velocity ωR is, therefore, the angular velocity in input to the machine.

Mechanical power in output is supplied by means of an axis solidly associated to the meta-rotor 30.

In other words, the meta-rotor 30 is solidly associated to the rotation means 40 to which it imparts an output angular velocity ωM.

The electric machine of the invention has been designed to eliminate torque fluctuations and disturbances originated by variable loads acting on a mechanical motor.

This machine increases the torque applied in output by reducing the velocity in input, i.e. adapting the torque produced to the torque demanded by the current load.

At the same time, the mechanical power is converted; a torque is generated as a function of the torque generated by the first motor. The mechanical power is transmitted directly from the first motor to the final load without any conversion.

This direct transmission enables maintaining the dimensioning of the machine according to the mechanical power transmitted. Only a part of the power in input will be converted as a function of the transmission ratio, i.e. the difference in terms of torque/velocity introduced between the input axis and the output axis.

The power flow diagram is described with reference to figure 6.

A mechanical motor will supply a mechanical power having a predetermined work point into the transmission system, i.e. with a constant torque (and velocity) so as to optimize the performance of the motor, mainly the dispensing of power.

The available power in output will be available in terms of various torque/velocity work points as long as the product (i.e. the power) remains constant.

To achieve this objective, the machine of the invention exploits a high and constant electro-mechanical efficiency through the whole range of output velocity values ωM and the respective torques provided.

More precisely, the exchange of power can be well interpreted in reference to the machine of the invention provided with an input axis connected to the rotor, an output axis connected to the meta-rotor and a bidirectional electrically-commanded axis interposed between two above-mentioned axes.

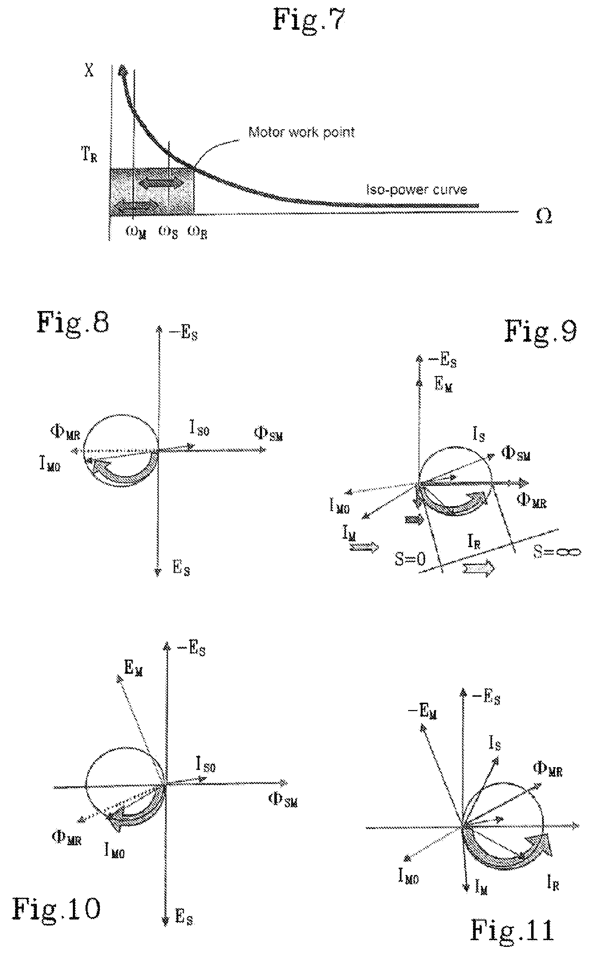

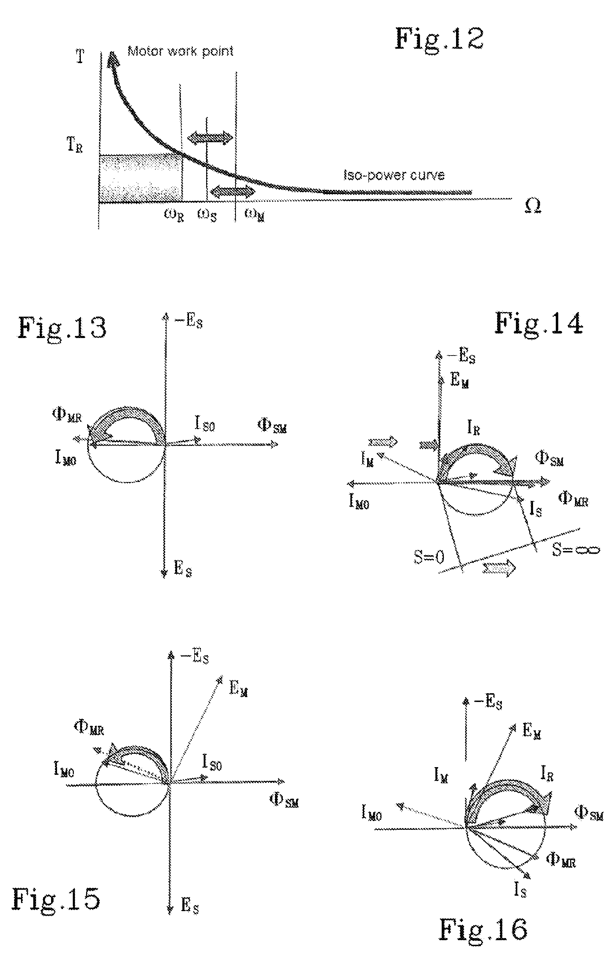

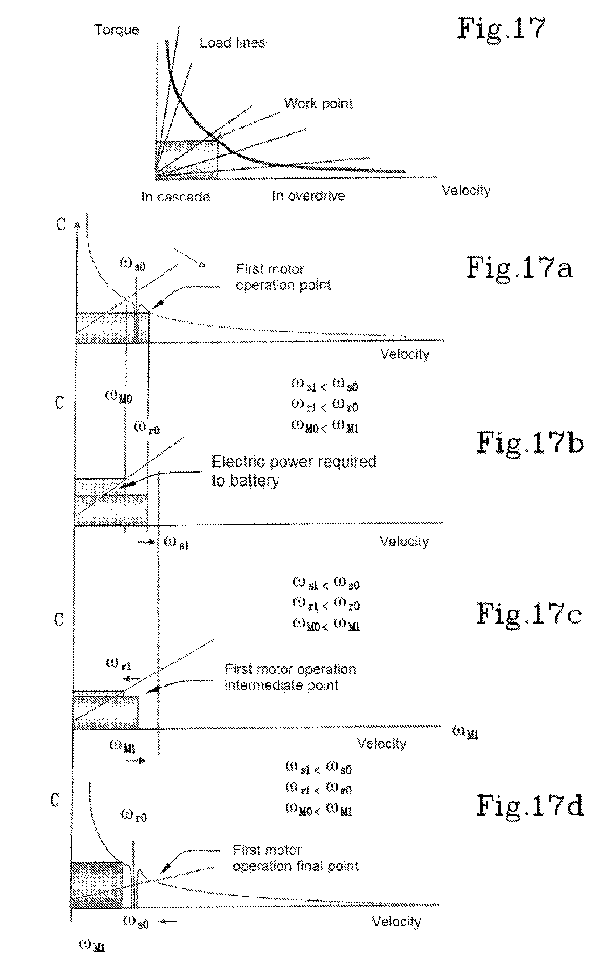

With reference to the transmission system of the invention, the input axis is connected to the first motor (mechanical motor) 50, the output axis is connected to the rotation means 40 and the bidirectional electrically-commanded axis is commanded by the inverter 60 commanded by the processor 100. A technical effect guaranteed by the electric motor of the invention is the guaranteed power saving made possible by the passage from a single functioning range to two functioning sub-ranges corresponding to three functioning modes:
- I) (figures 7, 8, 9, 10, 11): cascade functioning, in which ωM < ωS < ωR;
- II) (figures 12, 13, 14, 15, 16): overdrive functioning, in which ωM > ωS > ωR;
- III) (figures 17, 17a, 17b, 17c, 17d): passage from mode I to II and vice versa.

In other words, the processing unit 100 commands the inverter 60 according to the values of the rotation velocity ωM and ωR so as to determine a passage from a single functioning interval to two functioning sub-intervals corresponding to the two functioning modes.

In still other words, the processor 100 commands the inverter 60 according to currents and phases of supply, velocity and position of the meta-rotor 30 and rotor 20 so as to determine a passage from a sole functioning mode to two functioning sub-intervals corresponding to the two functioning modes.

In the light of the above, the following is a description, by way of example and therefore not limiting, of the two possible functioning modes of the machine 1 according to the invention.

In functioning mode I a velocity of the electrical impulse (or synchronism) is comprised that is lower than the velocity of the rotor, while the meta-rotor 30 rotates at a lower velocity ωM to both the stator velocity ωS and the rotor velocity ωR.

In other words, the relation ωM < ωS< ωR is valid, with particular reference to figure 7.

This functioning mode thus involves setting-up two asynchronous machines in cascade.

The more radially external machine is formed by the stator 10 and the meta-rotor 30, and functions as a motor. The more radially internal machine is formed by the meta-rotor 30 and the rotor 20 and causes a subtraction of velocity.

The characteristic of mechanical power in input is transformed. The difference of velocity generates electric power at the second air gap TRmr and serves to supply the greater torque developed at the first air gap TRsm.

The first functioning mode I can be explained in reference to two possible cases:
- 1.1: ωM=0, i.e. meta-rotor blocked (figures 8 and 9). It follows that ωM < ωS < ωR.
- I.2: 0<ωM < ωS << ωR i.e. the meta-rotor in movement (figures 10 and 11).

### Case I.1

The demonstration of the possibility of functioning of the machine of the invention in the first case I.1 is supplied using the phase diagrams of the tensions, currents and fluxes active in the machine at the two air gaps.

This functional mode sets up two asynchronous machines in cascade, in which the more external operates as a motor, adding torque, and the more internal as a generator, subtracting velocity.

The characteristic of mechanical power Pin at the input is transformed, the leap in velocity generates electric power at the air gap Tr_{MR} which serves to supply the greater torque developed at the air gap Tr_{SM}.

With the aim of making the functioning more comprehensible, first the situation with the meta-rotor stationary is demonstrated. This situation is fully representative of the standing start condition or "breakaway" against a load represented by the "first detachment resistance". In this case the torque must be the absolute maximum developable by the machine even though the instant power can even exceed the average power demanded.

The first diagram (figure 8) represents the situation at the stator/meta-rotor air gap.

This gives the phase diagram at the meta-rotor/rotor air gap (figure 9) where the effect of the crossed mesh is reported as a tilting by 180° of the flux ΦMR.

The loop drawn in figure 8 demonstrates the position of the points at which the current of the meta-rotor can be located, depending on the slip.

Since in this case the motor slip is at its maximum, the I_{M0} assumes the greatest phase displacement position.

The loop illustrated in figure 9 serves to show the location of the points on which the rotor current can be positioned, depending on the slip.

This slip is modifiable by controlling the frequency of the stator pulsation in relation to the velocity of the first motor.

Following the direction of the arrow, the current phase of the rotor continually improves the re-phasing of the resultant current I_{M}, which leaves the most extreme position IM0 and moves into a more advantageous position for generating of torque in relation with the stator flux phasor. As can be seen in the figures, this is obtained by increasing the slip, i.e. reducing the stator pulsation with respect to the rotor velocity (the meta-rotor velocity, though interposed, does not count).

Therefore the most advantageous condition is 0 = ωM < ωS << ωR.

Finally, in the optimal torque condition a vectorial diagram is provided, complete with only fluxes to the rotor/meta-rotor and the stator/meta-rotor, to demonstrate that the torques generated are functional for the set aims.

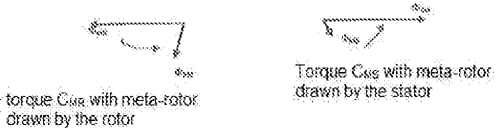

In the more internal air gap the rotor draws the meta-rotor while in the more external air gap the stator draws the meta-rotor, as evidenced by the direction of the torques generated at the two air gaps.

Thus, theoretically and qualitatively the proposed architecture functions at the starting and via an appropriate slip value can optimize the general performance of the mechanical-electrical-mechanical conversion.

### Case I.2

It is now simpler to derive the operation with the meta-rotor in movement.

With reference to figures 10 and 11, the flux established in the meta-rotor is slightly delayed with the phasor of the meta-rotor current as in the preceding case.

Thus the fluxes in the two air gaps are no longer in phase, but are rather rotated by a positive angle according to the slip at the stator/meta-rotor air gap.

From the point of view of the torque produced at the two air gaps, the situation is surely more advantageous than the preceding one and is not in accordance with the stability of the functioning.

This stability is demonstrated only if an increase in the torque exerted on the meta-rotor corresponds to the reduction of the velocity of the meta-rotor.

The figure clearly shows that this is not attained automatically because to an increase of the sliding of the meta-rotor corresponds an increase in the phase displacement of the meta-rotor current with respect to the stator current, with a consequent reduction in torque.

The desired functioning can be obtained by reducing the pulsating of the stator: this, on the one hand, reduces the sliding value of the meta-rotor (not very effective when the velocity nears zero), but especially increases the sliding to the rotor with a consequent greater phase correction of the rotor current *I_{R}* and therefore also the meta-rotor current I_{M}.

Therefore the processor 100 must be able to vary the frequency of the inverter 60 directly proportionally to the meta-rotor velocity ωM.

To do this, the processor 100 is configured such as to receive the velocity value ωM of the meta-rotor via the second velocity sensor S2 already described, installed on the axis of the meta-rotor output.

In the second functioning mode II an electrical pulsation velocity (or synchronism) is set that is greater than that of the rotor, while the meta-rotor 30 has a rotation velocity that is greater than both the stator and rotor velocity.

In other words, the relation ωR < ωS < ωM is valid, with particular reference to figure 12.

The demonstration of the possibility of functioning of the machine in this mode is given in the phasor diagrams of the tensions, currents and active fluxes in the machine at the two air gaps.

This functional mode sets up two asynchronous machines in cascade; the more external operates as a generator, subtracting torque, and the more internal as a motor, adding velocity.

The characteristic of mechanical power Pin in input is transformed by reduction of torque which generates electric power at the air gap TRsm which serves to supply the greater velocity dispensed at the air gap TRmr.

The second functioning mode II can be explained in reference to two possible cases:
- II.1: ω_{M}=∞, i.e. meta-rotor at infinite velocity (figures 13 and 14).
It follows that ωR << ωS < ωM =∞;
- II.2: functioning at high slip (figures 15 and 16).
It follows that ωR < ωS < ωM < ∞.

### Case II.1

In motor functioning, in the air gap TRmr a torque is established which by acting on the meta-rotor always creates torque resistant towards the rotor.

The mechanical torque transmitted by the meta-rotor to the rotor enables a transfer of mechanical power directly to the output axis without conversion into electric power.

Figure 13 illustrates the complete vectorial diagram of the two air gaps when the angular velocity ωR of the rotor is lower than the electric angular velocity ωS of the impulses applied to the stator.

Figure 13 illustrates the vectorial diagram of only the resulting flows so as to highlight the direction of the torques generated at the two air gaps.

In order better to explain the functioning, at first the situation of the meta-rotor is demonstrated at infinite velocity. This situation is fully representative of the nil-resistant torque condition against a "negative" load (traction in descent).

In this case the velocity must always be the maximum allowed by the machine.

Figure 13 represents the *situation at the stator*/*meta-rotor air gap.*

Figure 14 derives from this, which shows the phasorial diagram at the meta-rotor/rotor air gap, where the effect of the crossed mesh is reported with a tilting by 180° of the flux ΦMR.

The loop illustrated in figure 13 shows the position of the points on which the meta-rotor current can be located, depending on the slip. Since in this case the slip from the generator is at the maximum, the I_{MO} assumes the position at greatest phase displacement.

The loop illustrated in figure 14 serves to show the location of the points on which the rotor current can be located, depending on the slip.

The sliding is modifiable by controlling the frequency of the stator pulsation in relation to the velocity of the first motor. Following the direction of the arrow, the current phase of the rotor corrects the resultant current IM, which leaves the most extreme position I_{MO} and moves into a more advantageous position for the generating of electric power in relation to the stator flux phasor.

As can be seen from the figures this is obtained by increasing the slip, i.e. increasing the stator pulsation with respect to the rotor velocity (the meta-rotor velocity, though interposed, does not count).

Therefore the most advantageous condition is ωR << ωS < ωM =∞.

Finally, in the optimal torque condition a vectorial diagram is provided, complete with only fluxes to the rotor/meta-rotor and the stator/meta-rotor, to demonstrate that the torques generated are functional for the set aims.

In the more internal air gap the rotor pushes the meta-rotor while in the more external air-gap the stator brakes the meta-rotor, as shown by the direction of the torques generated at the two air gaps.

Thus, theoretically and qualitatively the proposed architecture functions at nil load and high output velocity. With an appropriate sliding value the general performance of the mechanical-electrical-mechanical conversion can be optimised.

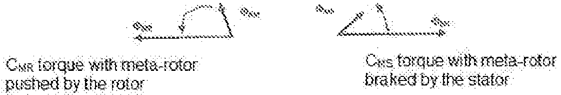

### CASE II.2

It is now simpler to derive the functioning of the meta-rotor at a realistic velocity.

The flow established in the meta-rotor is slightly delayed with the phasor of the rotor current as occurred in the preceding case.

Therefore fluxes in the two air gaps are no longer in phase but are rotated by a negative angle which is a function of the sliding to the stator/meta-rotor air gap.

From the point of view of the torque produced by the two air gaps, the situation is surely more advantageous than the preceding one and this is in line with the requisite of functioning stability.

This is achieved if an increase of the torque exerted on the meta-rotor corresponds to the reduction of velocity of the rotor.

Figures 15, 16 demonstrate that this is true because to an increase of the velocity (and the sliding) of the meta-rotor corresponds an increase in the phase displacement of the meta-rotor current with respect to the current of the stator, with a consequent reduction of torque. The desired functioning is therefore already reached in a natural way. Thus the controller, in overdrive, must maintain the frequency of the inverter at a constant value. This value must be determined in accordance with the torque demand in the overdrive section.

In other words, the processor 100 is configured to control the inverter 60 so as to maintain the frequency of the inverter 60 at a constant value; the value of the frequency is determined in accordance with the torque demand in the second functioning mode.

The third functioning mode III includes the passage from modality I to II and vice versa (figures 17, 17a, 17b, 17c, 17d).

In the electric machine of the invention, the processor 100 is configured so as to control the inverter 60 as a function of the values of the rotation velocity ωM of the meta-rotor and the rotation velocities ωR of the rotor so as to determine a passage between the first functioning mode I and the second functioning mode II.

To date two functioning modes have been described which exhibit a discontinuity at the synchronism velocity.

In fact, at this velocity it is not possible to transmit torque and the machine stops functioning.

To obviate this drawback the machine implements a special functionality or manoeuvre which enables passage of the meta-rotor velocity through this discontinuity.

This leads to the inversion of the relation between the rotor velocity and the synchronism velocity.

All this is controlled according to the load curve (which we hypothesise as straight).

When the resistant torque is greater than the dispensed torque (dispensable) by the first motor in the preselected work point, the machine functions "in cascade", i.e. the velocity of the rotor is greater than the velocity of synchronism; when the resistant torque is lower, the machine functions "in overdrive".

If the meta-rotor reaches synchronism the machine ceases supplying torque to the output axis, for which reason this situation is to be avoided.

This is obtained with two distinct actions:
1. the first is a slight reduction of velocity of the first motor (figure 17c);
2. the second is a slight increase in the pulsation which displaces upwards the velocity of synchronism (figure 17d).

In other words, the processor 100 is configured to realise said passage from the first functioning mode (I) to the second functioning mode (II) by performing:
- a detection of the rotor velocity (10) by means of the first sensor (S1);
- a comparison of the read value with the synchronism vale;
- should the rotor speed be greater than the synchronism speed:
   o the rotor speed (ωR) is slightly reduced;
   o the pulsation is slightly increased and increases the synchronism velocity.
When the straight line of the load brings the work point too close to the synchronism velocity, the pulsation applied to the stator must be increased in order to prevent stalling. The synchronism velocity, brought beyond the rotor velocity, generates a new situation.

A motor is set up on the rotor/meta-rotor air gap in place of the generator; the torque generated previously to the air gap of the stator must all be supported by the battery for a brief period; the torque supported by the first motor grows and the rotor slows down, while the meta-rotor accelerates. When the meta-rotor velocity is sufficiently greater than the rotor velocity, the synchronism pulsation must be reduced with the aim of bringing the synchronism velocity between the two rotor and meta-rotor velocities.

This creates a stable functioning situation "in overdrive".

A possible application of the machine 1 according to the present invention is drawing vehicles with a hybrid thermal-electric system.

The invention also described a traction system which exploits the above-described electric machine.

The traction system, according to the invention, comprises:
- moving members 50, for example a thermal motor or first motor,
- rotation means 40, for example wheels,
- the electric machine of the invention, as described, interposed between the moving members 50 and the rotation means 40.

This application of the invention, as shown in figure 5, has the advantage of simplifying both the electric part and the mechanical part, replacing the traditional mechanical gear-change/clutch or automatic transmission.

Returning now to the description of the general concept of the invention, the machine 1, in the architecture shown, can also perform the task of the starter motor and/or the secondary traction motor by using the electric power dispensed by a battery.

Further, by appropriately controlling the magnetising power developed in the machine 1 it is possible to carry out the function of a clutch in a substantially automatic way.

Note that each time the balance between the power dispensed by the thermal motor and the power delivered to the wheels of the vehicle is positive, the excess power can be used to recharge the battery.

The processor overseeing the control of the machine 1 can advantageously be constituted by the electronic board controlling the thermal motor.

With reference to the application described herein above, note that thermal motors are not sufficiently flexible to suitably follow the variations of load to which a vehicle is subjected during the exercise thereof.

For this reason, at present all vehicle with an internal combustion engine have at least two other devices installed, which enable the problem to be overcome: one is the clutch and the other is the transmission.

These two devices enable adapting the characteristics of the motor to the load characteristics.

Thus, the vehicles exhibit, from this point of view, a significant complexity, which however is not substantially perceived by the users, since the mentioned devices have been adopted from the first motor vehicles and have then been subjected to a very long improvement process.

As other solutions are not at present available, this type of complexity is at present supported and considered normal; a macroscopic effect is however detectable in terms of final costs of the automobile, and vehicles in general.

Electric vehicles are characterised by a greater simplicity; for example, there are some vehicles (for example trams) which, though antiquated, still work in a satisfactory way as they are equipped with an electric motor. The electric motor is in fact much more versatile with regard to traction demand, and exhibits a limited inclination to wear and a high degree of reliability.

With specific reference to electric automobiles, they exhibit a substantial problem relative to the fact that the energy accumulable in a battery is still not sufficient, and cannot therefore guarantee satisfactory range.

A first solution is represented by hybrid cars, which manage to combine the advantages of the internal combustion engine (powered by fuel) with those of the electric motor.

In this case too, however, the architectures are very complex, as an entire electric structure is added to a whole mechanical structure.

The solution described and claimed herein enables lightening the mechanical structure by adding a simple electric structure.

A further possible application of the machine 1, according to the present invention, relates to a possible protection of the synchronous generators in the realisation of electric energy in the plant.

Synchronous generators, if subjected to excessive network load, tend to slip and pass beyond the maximum functioning torque angle. This is normally compensated-for by a rise in excitation current of the rotor. When however this current has reached its maximum value and compensation is no longer possible, the torque angle slips and exceeds the maximum 90° value. The generator enters an oscillating phase with serious electrical, mechanical and safety problems.

The invention as described can be interposed between the input axis, i.e. the axis of a turbine, and the axis of the synchronous generator, guaranteeing the mechanical decoupling between the electric axis of the synchronous and the mechanical input axis, making a slippage of the synchronous generator possible, and preventing the rotor from oscillating and decoupling from the network.

The machine of the present invention can further operate in a "regenerative" mode, i.e. converting the power lost in slippage directly into electric power, which can then be returned to the network.

## Claims

1. An electric machine comprising:
- a stator (10) having a substantially cylindrical conformation and extending along a longitudinal axis (X);
- a rotor (20) having a substantially cylindrical conformation and movable in rotation about said longitudinal axis (X) ;
- a meta-rotor (30), radially interposed between said stator (10) and said rotor (20) and movable in rotation about said longitudinal axis (X);
wherein said meta-rotor (30) has a substantially cylindrical conformation with a radially internal portion (31) and a radially external portion (32) separated by a separation region (33),
said meta-rotor (30) comprising at least an electrically conductive wire (34) comprising a plurality of contiguous portions (35), each portion comprising, in succession:
· a first section (35a) extending on the radially external surface of said radially external portion (32), parallel to said longitudinal axis (X);
· a second section (35b) extending in said separation region (33), parallel to said longitudinal axis (X);
· a third section (35c) extending on the radially internal surface of said radially internal portion (31), parallel to said longitudinal axis (X),
wherein each of the portions (35) of said wire (34) further comprises a fourth section (35d) following said third section (35c) and extending into said separation region (33), parallel to said longitudinal axis (X)
**characterised in that**
each portion (35) of said wire (34) further comprises connection sections (36a-36b) for connecting said first section (35a) to said second section (35b), said second section (35b) to said third section (35c) and, preferably, said third section (35c) to said fourth section (35d).

2. An electric machine according to claim 1, wherein said stator (10) extends at a position radially external of the meta-rotor (30, 30a) and the rotor (20, 20a), while the rotor (20, 20a) radially extends at least partly internally of said meta-rotor (30, 30a).

3. An electric machine as claimed in any one of the preceding claims, comprising a first air gap (TRsm) between the stator (10) and meta-rotor (30), and a second air gap (TRmr) between the meta-rotor (30) and the rotor (20, 20a).

4. An electric machine as claimed in claim 3, comprising a third air gap (TRrs) between the rotor (20a) and stator (10).

5. An electric machine as claimed in anyone of the preceding claims, wherein said separation region (33) has a plurality of pairs of through-holes (33a, 33b), each through-hole (33a, 33b) being arranged parallel to said longitudinal axis (X), each of said pairs of through-holes (33a, 33b) housing a second section (35b) and preferably a fourth section (35d) of a respective portion of the portions (35) of said electrically-conductive wire (34).

6. An electric machine as claimed in any one of the preceding claims, comprising a processor (100) associated with:
· a first sensor (S1) configured to detect a parameter representative of the angular velocity ωR of the rotor (20),
· a second sensor (S2) configured to detect a parameter representative of the angular velocity ωM of the meta-rotor (30),
said first (S1) and second (S2) sensors being used for actuating a co-ordinated control on the rotor (20) and meta-rotor (30).

7. An electric machine as claimed in the preceding claim, comprising an inverter (60) controlled by said processor (100).

8. An electric machine as claimed in claim 7, wherein said processor (100) is configured such as to control said inverter (60) as a function of the values of the rotation speed of meta-rotor (ωM) and rotor (ωR) for determining a passage from a single functioning interval to two functioning sub-intervals corresponding to two operation modes:
• a first operation mode (I) in which said meta-rotor rotation speed (ωM) is lower than the rotor rotation speed (ωR);
• a second operation mode (II) in which said meta-rotor rotation speed (ωM) is greater than the rotor rotation speed (ωR).

9. An electric machine as claimed in claim 8, wherein in said first operation mode (I), said processing unit (100) is configured to control said inverter (60) so as to vary the frequency of said inverter (60) in a proportional manner to said meta-rotor speed (ωM).

10. An electric machine as claimed in claim 8, wherein in said second operation mode (II), said processor (100) is configured to control said inverter (60) so as to maintain a frequency of said inverter (60) at a constant value, wherein the frequency value is determined in accordance with the torque request in said second operation mode.

11. An electric machine as claimed in anyone of claims from 8 to 10, wherein said processing unit (100) is configured to control said inverter (60) as a function of the values of the meta-rotor (30) rotation speed (ωM) and the rotor (10) rotation speed (ωR) for determining a passage between said first operation mode (I) and said second operation mode (II).

12. An electric machine as claimed in claim 11, wherein said processing unit (100) is configured to carry out said passage from said first functioning mode (I) to said second functioning mode (II), by performing:
• detection of the rotor (10) speed through the first sensor (S1) ;
• comparison of the read value with the synchronism value;
• should the rotor speed be greater than the synchronism speed:
the rotor speed (ωR) is slightly reduced;
pulsation is slightly increased for increasing the synchronism speed.

13. A traction system comprising:
• moving members (50);
• rotation means (40) configured to be moved by said moving members (50),
• the electric machine as claimed in anyone of claims 1 to 13, interposed between the moving members (50) and rotation means (40).

## Patentansprüche

1. Elektrische Maschine, umfassend:
- einen Stator (10), aufweisend eine im Wesentlichen zylindrische Beschaffenheit und sich erstreckend entlang einer Längsachse (X);
- einen Rotor (20), aufweisend eine im Wesentlichen zylindrische Beschaffenheit und sich drehend bewegbar um diese Längsachse (X) ;
- einen Meta-Rotor (30), der radial zwischen dem Stator (10) und dem Rotor (20) eingesetzt ist und sich drehend um die Längsachse (X) bewegbar ist, wobei der Meta-Rotor (30) eine im Wesentlichen zylindrische Beschaffenheit mit einem radial internen Abschnitt (31) und einem radial externen Abschnitt (32) aufweist, die durch eine Trennregion (33) getrennt sind, wobei der Meta-Rotor (30) mindestens einen elektrisch leitenden Draht (34) umfasst, umfassend eine Vielzahl an angrenzenden Abschnitten (35), wobei ein jeder Abschnitt nacheinander umfasst:
- eine erste Sektion (35a), die sich auf der radial externen Oberfläche des radial externen Abschnitts (32) parallel zur Längsachse (X) erstreckt;
- eine zweite Sektion (35b), die sich in der Trennregion (33) parallel zur Längsachse (X) erstreckt;
- eine dritte Sektion (35c), die sich auf der radial internen Oberfläche des radial internen Abschnitts (31) parallel zur Längsachse (X) erstreckt, wobei ein jeder der Abschnitte (35) des Drahts (34) zudem eine vierte Sektion (35d) umfasst, folgend der dritten Sektion (35c) und sich erstreckend in der Trennregion (33) parallel zur Längsachse (X), **dadurch gekennzeichnet, dass** ein jeder Abschnitt (35) des Drahts (34) zudem Verbindungssektionen (36a-36b) umfasst, um die erste Sektion (35a) mit der zweiten Sektion (35b), die zweite Sektion (35b) mit der dritten Sektion (35c) und vorzugsweise die dritte Sektion (35c) mit der vierten Sektion (35d) zu verbinden.

2. Elektrische Maschine nach Anspruch 1, wobei sich der Stator (10) an einer Position erstreckt, die sich radial außerhalb des Meta-Rotors (30, 30a) und des Rotors (20, 20a) befindet, während sich der Rotor (20, 20a) radial mindestens teilweise im Meta-Rotor (30, 30a) erstreckt.

3. Elektrische Maschine nach einem der vorhergehenden Ansprüche, umfassend einen ersten Luftspalt (TRsm) zwischen dem Stator (10) und dem Meta-Rotor (30) und einen zweiten Luftspalt (TRmr) zwischen dem Meta-Rotor (30) und dem Rotor (20, 20a).

4. Elektrische Maschine nach Anspruch 3, umfassend einen dritten Luftspalt (TRrs) zwischen dem Rotor (20a) und dem Stator (10).

5. Elektrische Maschine nach einem der vorhergehenden Ansprüche, wobei die Trennregion (33) eine Vielzahl von Paaren von Durchführungsöffnungen (33a, 33b) aufweist, wobei eine jede Durchführungsöffnung (33a, 33b) parallel zur Längsachse (X) angeordnet ist und ein jedes der Paare der Durchführungsöffnungen (33a, 33b) eine zweite Sektion (35b) und vorzugsweise eine vierte Sektion (35d) eines jeweiligen Abschnitts der Abschnitte (35) des elektrisch leitenden Drahts (34) beherbergt.

6. Elektrische Maschine nach einem der vorhergehenden Ansprüche, umfassend einen Prozessor (100), assoziiert mit:
- einem ersten Sensor (S1), der ausgelegt ist, um einen Parameter zu erfassen, der repräsentativ für die Winkelgeschwindigkeit ωR des Rotors (20) ist,
- einem zweiten Sensor (S2), der ausgelegt ist, um einen Parameter zu erfassen, der repräsentativ für die Winkelgeschwindigkeit ωM des Meta-Rotors (30) ist, wobei der erste (S1) und der zweite (S2) Sensor eingesetzt werden, um eine abgestimmte Steuerung auf den Rotor (20) und den Meta-Rotor (30) zu bewirken.

7. Elektrische Maschine nach dem vorhergehenden Anspruch, umfassend einen über den Prozessor (100) gesteuerten Inverter (60).

8. Elektrische Maschine nach Anspruch 7, wobei der Prozessor (100) ausgelegt ist, um den Inverter (60) abhängig von den Werten der Drehzahl des Meta-Rotors (ωM) und des Rotors (ωR) zu steuern, um einen Übergang von einem einzelnen Betriebsintervall zu zwei Betriebs-Subintervallen zu bestimmen, die zwei Betriebsarten entsprechen:
- einer ersten Betriebsart (I), in der die Drehzahl (ωM) des Meta-Rotors geringer ist als die Drehzahl des Rotors (ωR);
- einer zweiten Betriebsart (II), in der die Drehzahl (ωM) des Meta-Rotors höher ist als die Drehzahl des Rotors (ωR).

9. Elektrische Maschine nach Anspruch 8, wobei die Verarbeitungseinheit (100) in der ersten Betriebsart (I) ausgelegt ist, um den Inverter (60) zu steuern, sodass die Frequenz des Inverters (60) proportional zur Drehzahl des Meta-Rotors (ωM) geregelt wird.

10. Elektrische Maschine nach Anspruch 8, wobei der Prozessor (100) in der zweiten Betriebsart (II) ausgelegt ist, um den Inverter (60) zu steuern, sodass ein konstanter Wert einer Frequenz des Inverters (60) aufrechterhalten wird, wobei der Frequenzwert in Übereinstimmung mit der Drehmomentanforderung in der zweiten Betriebsart bestimmt wird.

11. Elektrische Maschine nach einem der Ansprüche 8 bis 10, wobei die Verarbeitungseinheit (100) ausgelegt ist, um den Inverter (60) abhängig von den Werten der Drehzahl (ωM) des Meta-Rotors (30) und der Drehzahl (ωR) des Rotors (10) zu steuern, um einen Übergang zwischen der ersten Betriebsart (I) und der zweiten Betriebsart (II) zu bewirken.

12. Elektrische Maschine nach Anspruch 11, wobei die Verarbeitungseinheit (100) ausgelegt ist, um den Übergang von der ersten Betriebsart (I) zur zweiten Betriebsart (II) durchzuführen, indem Folgendes ausgeführt wird:
- Erfassen der Drehzahl des Rotors (10) mittels des ersten Sensors (S1);
- Vergleich des erfassten Werts mit dem Synchronisationswert;
- Ist die Rotordrehzahl höher als die Synchronisationsdrehzahl, wird die Rotordrehzahl (ωR) leicht reduziert. Zur Erhöhung der Synchronisationsdrehzahl wird die Pulsation leicht erhöht.

13. Antriebssystem, umfassend:
- Bewegungselemente (50);
- Rotationsmittel (40), die ausgelegt sind, um von den Bewegungselementen (50) bewegt zu werden,
- die elektrische Maschine nach einem der Ansprüche 1 bis 13, eingesetzt zwischen den Bewegungselementen (50) und den Rotationsmitteln (40).

## Revendications

1. Machine électrique comprenant :
- un stator (10) présentant une configuration essentiellement cylindrique et se développant le long d'un axe longitudinal (X) ;
- un rotor (20) présentant une configuration essentiellement cylindrique et mobile en rotation autour dudit axe longitudinal (X) ;
- un méta-rotor (30), intercalé radialement entre ledit stator (10) et ledit rotor (20) et mobile en rotation autour dudit axe longitudinal (X) ; dans laquelle ledit méta-rotor (30) présente une configuration essentiellement cylindrique avec une partie radialement interne (31) et une partie radialement externe (32) séparées par une région de séparation (33), ledit méta-rotor (30) comprenant au moins un fil électriquement conducteur (34) comprenant une pluralité de parties contiguës (35), chaque partie comprenant en séquence .
- une première section (35a) se développant sur la surface radialement externe de ladite partie radialement externe (32), parallèle audit axe longitudinal (X) ;
- une seconde section (35b) se développant dans ladite région de séparation (33), parallèle audit axe longitudinal (X) ;
- une troisième section (35c) se développant sur la surface radialement interne de ladite partie radialement interne (31), parallèle audit axe longitudinal (X), dans laquelle chacune des parties (35) dudit fil (34) comprend aussi une quatrième section (35d) suivant ladite troisième section (35c) et se développant dans ladite région de séparation (33), parallèle audit axe longitudinal (X), **caractérisée en ce que** chaque partie (35) dudit fil (34) comprend également des sections de connexion (36a-36b) pour connecter ladite première section (35a) à ladite seconde section (35b), ladite seconde section (35b) à ladite troisième section (35c) et, de préférence, ladite troisième section (35c) à ladite quatrième section (35d).

2. Machine électrique selon la revendication 1, dans laquelle ledit stator (10) se développe à une position radialement externe du méta-rotor (30, 30a) et du rotor (20, 20a), pendant que le rotor (20, 20a) se développe radialement au moins partiellement à l'intérieur dudit méta-rotor (30, 30a).

3. Machine électrique selon l'une quelconque des revendications précédentes, comprenant un premier entrefer (TRsm) entre le stator (10) et le méta-rotor (30), er un second entrefer (TRmr) entre le méta-rotor (30) et le rotor (20, 20a).

4. Machine électrique selon la revendication 3, comprenant un troisième entrefer (TRrs) entre le rotor (20a) et le stator (10).

5. Machine électrique selon l'une quelconque des revendications précédentes, dans laquelle ladite région de séparation (33) présente une pluralité de paires de trous de passage (33a, 33b), chaque trou de passage (33a, 33b) étant parallèle audit axe longitudinal (X), chacune desdites paires de trous de passage (33a, 33b) contenant une seconde section (35b) et, de préférence, une quatrième section (35d) d'une partie respective des parties (35) dudit fil électriquement conducteur (34).

6. Machine électrique selon l'une quelconque des revendications précédentes, comprenant un processeur (100) associé à :
- un premier capteur (S1) configuré pour détecter un paramètre représentatif de la vitesse angulaire ωR du rotor (20),
- un second capteur (S2) configuré pour détecter un paramètre représentatif de la vitesse angulaire ωM du méta-rotor (30), ledit premier (s1) et ledit second (S2) capteurs servant à activer une commande coordonnée sur le rotor (20) et le méta-rotor (30).

7. Machine électrique selon la revendication précédente, comprenant un onduleur (60) piloté par ledit processeur (100).

8. Machine électrique selon la revendication 7, dans laquelle ledit processeur (100) est configuré pour piloter ledit onduleur (60) en fonction des valeurs de la vitesse de rotation du méta-rotor (ωM) et du rotor (ωR) pour déterminer un passage d'un simple intervalle de fonctionnement à deux sous-intervalles de fonctionnement correspondant à deux modes de fonctionnement:
- un premier mode de fonctionnement (I) dans lequel ladite vitesse de rotation du méta-rotor (ωM) est inférieure à la vitesse de rotation du rotor (ωR);
- un second mode de fonctionnement (II) dans lequel ladite vitesse de rotation du méta-rotor (ωM) est supérieure à la vitesse de rotation du rotor (ωR).

9. Machine électrique selon la revendication 8, dans laquelle dans ledit premier mode de fonctionnement (I), ledit processeur (100) est configuré pour piloter ledit onduleur (60) de sorte à varier la fréquence dudit onduleur (60) d'une façon proportionnelle à ladite vitesse du méta-rotor (ωM).

10. Machine électrique selon la revendication 8, dans laquelle dans ledit second mode de fonctionnement (II), ledit processeur (100) est configuré pour piloter ledit onduleur (60) de sorte à maintenir une fréquence dudit onduleur (60) à une valeur constante, où la valeur de fréquence est déterminée selon la demande de couple dans ledit second mode de fonctionnement.

11. Machine électrique selon l'une quelconque des revendications 8 à 10, dans laquelle ledit processeur (100) est configuré pour piloter ledit onduleur (60) en fonction des valeurs de la vitesse de rotation (ωM) du méta-rotor (30) et de la vitesse de rotation (ωR) du rotor (10) pour déterminer un passage entre ledit premier mode de fonctionnement (I) et ledit second mode de fonctionnement (II).

12. Machine électrique selon la revendication 11, dans laquelle ledit processeur (100) est configuré pour réaliser ledit passage dudit premier mode de fonctionnement (I) audit second mode de fonctionnement (II) comme suit:
- détection de la vitesse du rotor (10) via le premier capteur (S1);
- comparaison de la valeur lue à la valeur de synchronisme ;
- si la vitesse du rotor est supérieure à la vitesse de synchronisme: la vitesse du rotor (ωR) est légèrement diminuée ; la pulsation est légèrement augmentée pour augmenter la vitesse de synchronisme.

13. Système de traction comprenant:
- des organes mobiles (50) ;
- des moyens de rotation (40) configurés pour être bougés par lesdits organes mobiles (50),
- la machine électrique selon l'une quelconque des revendications 1 à 13, intercalée entre les organes mobiles (50) et les moyens de rotation (40).
